# EUROPEAN PATENT SPECIFICATION

(11) **EP 0 565 941 B1**
(45) Date of publication and mention of the grant of the patent: **28.05.1997**
(21) Application number: 93105251.8
(22) Date of filing: 30.03.1993
(51) Int. Cl.: B01J 37/02, C09C 1/00, F24C 15/00, C03C 8/14

(54) **Catalytically active coating composition**
Katalytisch aktive Überzugszusammensetzung
Composition de revêtement catalytiquement active

(30) Priority: 16.04.1992 DE 4212691
(43) Date of publication of application: 20.10.1993
(73) Proprietor: MERCK PATENT GmbH, D-64271 Darmstadt (DE)
(72) Inventor: Weigand, Manfred, Dr., W-6108 Weiterstadt (DE); Voss, Eckhard, W-6340 Dillenburg (DE)

(56) References cited:
- EP-A- 0 220 509
- EP-A- 0 453 897
- GB-A- 2 096 593
- US-A- 3 460 523
- US-A- 4 147 835

## Description

The present invention relates to the use of a catalytically active coating composition which is distinguished by the fact that it comprises an enamel frit, inert substances and, as oxidation catalyst, a platelet-shaped substrate coated with one or more metal oxides.

Catalytically active enamels are used in particular for the coating of metal substrates, in particular on enamellable steel for the formation of continuously self-cleaning coating on stove walls of cookers, ovens and grills.

Self-cleaning enamel coatings on stove walls based on an oxidation catalyst have been known for a long time and are highly advantageous, since they enable grease drops or organic food residues to be removed at the conventionally used baking and grilling temperatures of 180-280°C, thus making the separate cleaning cycle, such as, for example in the case of pyrolytic ovens, at elevated temperature unnecessary.

Catalytically active coating compositions have been known for a long time. However, they have a number of technical economical and/or ecological disadvantages limiting their general applicability to a greater or lesser extent. As a rule, the coating compositions contain, as the oxidation catalyst, one or more oxygen compounds of noble metals or heavy metals such as cobalt, nickel, copper, chromium or manganese. In US 3,266,777, a self-cleaning coating composition based on an oxidation catalyst is known, which can be prepared by a very complicated procedure and is very expensive, due to the noble metals present. US 3,460,523 describes a coating composition for the coating of base-enamelled metal substrates, which likewise contains expensive catalytically active metals or metal oxides, such as, for example, platinum and ruthenium. These not completely harmless amounts of noble or heavy metals in close contact with baked and grilled foods are problematical.

GB-A-2 096 593 is directed to a glass enamel composition comprising a glass frit and a nacreous pigment for the production of a decorative glassware with an enhanced aesthetic appearance. EP-A-0 220 509 claims special pearlescent pigments which are based on mica flakes coated with metal oxides. In view of their improved stability these pigments are highly suitable for pigmenting ceramic materials and surface coatings to achieve a decorative pearlescent effect. The EP-A-0 453 897 describes a self-cleaning coating composition comprising an enamel frit, an inert substance and as oxidation catalyst an oxide of Cu, Ni or Co.

Accordingly, there was a need to find a catalytically active coating composition which does not contain any toxic heavy metal/heavy metal oxide as oxidation catalyst, but nevertheless has high catalytic activity.

Surprisingly, it has now been found that the catalytic action of a coating composition containing, as the oxidation catalyst, a platelet-shaped substrate coated with one or more metal oxides instead of the noble metal oxides or heavy metal oxides can be significantly increased.

Accordingly, the present invention relates to the use of a catalytically active coating composition for the coating of metal substrates for the formation of continuously self-cleaning coatings on stove walls or cookers, ovens and grills wherein the coating composition comprises an enamel frit, 20-80 % by weight of heat-resistant inert substances, and 3-30 % by eight of an oxidation catalyst, relative to the dry weight of the composition, characterized in that the oxidation catalyst is a mica platelet coated with one or more metal oxides .

The enamel coating composition preferably contains components customary for enamel, such as SiO₂, B₂O₃, TiO₂, ZrO₂, P₂O₅, Fe₂O₃, Al₂O₃, alkali metal oxides and alkaline earth metal oxides. In order to enlarge the surface area, heat-resistant inert substances such as, for example, quartz, feldspar or alumina are used, which are present in a weight proportion of 20-80% by weight, preferably 40-60% by weight, relative to the dry weight of the composition.

The catalytically active substance is a mice platelet-shaped substrate coated with one or more metal oxides.

Suitable oxidation catalysts are in particular mica-based nacreous pigments. Nacreous pigments are mica platelets which have a diameter of about 1 to 200 µm and a thickness of about 0.1 to 5 µm and are provided with a coating comprising coloured or colourless metal oxides, in particular TiO₂, Fe₂O₃, SnO₂, Cr₂O₃, ZnO and other metal oxides, alone or in a mixture, in a uniform layer or in a series of layers.

Pigments of this type have been described in a large number of patents and patent applications, such as, for example, German Patent Specifications 1,467,468, 1,959,998, 2,009,566, 2,106,613, 2,214,545, 2,215,191, 2,244,298, 2,313,331, 2,429,762, 2,522,572, 3,137,808, 3,137,809, 3,151,343, 3,151,354, 3,151,355, 3,211,602 and 3,235,017, and can be prepared by the processes described there. Pigments of this type usually comprise about 20 to 60% by weight of mica, while the metal oxides substantially make up the balance.

In particular, catalytically active enamel coatings containing titanium- and/or iron-containing nacreous pigments as the oxidation catalyst are distinguished by an increased self-cleaning power compared with customary enamels.

The enamel coating composition used in the invention comprises 3 to 30% by weight, and in particular 5 to 20% by weight, of oxidation catalyst.

The enamel frits required for the enamel are obtained from commercially available enamel raw materials, such as ground guartz, borax, feldspar, sodium polyphosphate, zircon sand, sodium carbonate and lime, by melting at 1200 to 1400°C and quenching on water-cooled steel rollers or by discharge into water. The enamel frits thus prepared are milled in dry form to a fineness of milling of 0.1-300 µm, preferably 10-20 µm, mixed with the inert substances and milled while wet. The enamel is milled to a fineness of milling of 1-3 cm³ on a sieve having 3600-16900 meshes/cm². Finally, the oxidation catalyst is mixed in.

In order to test the self-cleaning properties, the coating composition is applied to test panels, and, if necessary, dried and stoved at temperatures of 560 to 840°C. The enamel coatings thus prepared have a layer thickness of 100 to 500 µm, preferably 200 to 400 µm.

The self-cleaning power of the enamel is evaluated by DIN ISO 8291 (oil test). Compared with customary enamels with about 7 cycles according to DIN ISO 8291, the enamel according to the invention shows an increased number of cycles.

The coating composition can be applied to the metal surface by customary application processes, such as spray-coating, flow-coating or dip-coating. Accordingly, the invention also relates to the application of the coating composition to the metal substrate in the form of an agueous suspension by the two-layer/two-firing process or by the two-layer/single-firing process.

The enamel is used for the formation of self-cleaning coatings on stove walls of cookers, ovens and grills.

Accordingly, the invention also relates to the use of the enamel according to the invention for the coating of metal substrates for the formation of continuously self-cleaning coatings of cookers, ovens and grills. A suitable metal substrate is preferably enamellable steel.

The examples which follow serve to illustrate the invention:

### Example 1

A commercially available enamel frit (transparent matt enamel frit, MT 7520, from Wendel GmbH) having a softening point of 815°C was premilled while dry in a ball mill to a fineness of milling of on average 10 to 200 µm. The premilled frit was then mixed while dry with inert substances to give catalytic enamel 1, and the mixture was milled while wet in accordance with milling formula 1.

Catalytic enamel 1 has the following composition:

| | |
|---|---|
| MT 7250 premilled | 28 |
| Quartz sand | 39 |
| Rock powder | 28 |
| Boron phosphate | 4.5 |
| Methylcellulose | 0.5 |
| Milling formula 1 | |
| Catalytic enamel 1 | 80 |
| White clay 500* | 3 |
| Blue clay 530/N* | 2 |
| Boric acid | 0.15 |
| Magnesium carbonate | 0.15 |
| Sodium nitrite | 0.15 |
| Water | 50 |

| | |
|---|---|
| * (from Müllenbach & Thewald) | |

The enamel was milled to a fineness of milling of 3 cm³ on a sieve having 3,600 meshes/cm².

10 parts of Iriodin 153 (TiO₂-coated mica pigment of particle size 30-100 µm from E. Merck, Darmstadt) were then added to the milled catalytic enamel according to milling formula 1 and mixed therewith for a short period.

This coating composition was spray-coated onto a base-enamelled steel test panel, which was dried at about 80°C and stoved at 820°C for 4 minutes. The layer thickness was 350 µm. The completely enamelled test panel, tested according to ISO 8291, showed a self-cleaning power of 19 cycles before a deposit formed.
b) 10 parts of Iriodin 163 (TiO₂-coated mica pigment of particle size 40-200 µm from E. Merck, Darmstadt) were added to the milled catalytic enamel obtained according to milling formula 1. The coating composition was applied to a base-enamelled steel test panel analogously to Example a. At a layer thickness of 400 µm, a self-cleaning power of 17 cycles was achieved.
c) 10 parts of Iriodin 355 (Fe₂O₃/TiO₂-coated mica pigment of particle size 30-100 µm from E. Merck, Darmstadt) were added to the milled catalytic enamel obtained according to milling formula 1. The coating composition was applied to a base-enamelled steel test panel analogously to Example a. At a layer thickness of 300 µm, a self-cleaning power of 17 cycles was achieved.

### Example 2

10 parts of Iriodin 163 were added to the catalytic enamel milled according to milling formula 1 and mixed therewith for a short period.

The coating composition was spray-coated onto a merely degreased steel test panel by the two-layer/single-firing process, dried at about 80°C and stoved at 820°C for 4 minutes.

The base used for this application process was an enamel such as is described in Mitteilungen des Vereins Deutscher Emailfachleute, volume 35 - No. 12 from 1987 - page 153.

The layer thickness was 300 µm. The completely enamelled test panel, tested according to ISO 8291, showed a self-cleaning power of 14 cycles.

## Claims

1. Use of a catalytically active coating composition for the coating of metal substrates for the formation of continuously self-cleaning coatings on stove walls or cookers, ovens and grills wherein the coating composition comprises an enamel frit, 20-80 % by weight of heat-resistant inert substances, and 3-30 % by weight of an oxidation catalyst, relative to the dry weight of the composition, characterized in that the oxidation catalyst is a mica platelet coated with one or more metal oxides

2. Use of a catalytically active coating composition according to claim 1, characterized in that the oxidation catalyst is a mica platelet coated with TiO₂ and/or Fe₂O₃.

3. Self-cleaning coated metal substrates for stove walls or cookers, ovens and grills comprising a catalytically active coating composition which comprises an enamel frit, 20-80 % by weight of heat-resistant inert substances, and 3-30 % by weight of an oxidation catalyst, relative to the dry weight of the composition, characterized in that the oxidation catalyst is a mica platelet coated with one or more metal oxides.

4. Self-cleaning coated metal substrates according to claim 3 characterized in that the coating composition applied has a layer thickness of 100 to 500 µm.

5. Process for the preparation of a self-cleaning coated metal substrate according to claim 3, characterized in that the coating composition is applied to the metal substrate in the form of an aqueous suspension by the two-layer/two-firing or two-layer/single firing process.

## Patentansprüche

1. Verwendung einer katalytisch aktiven Überzugsmasse für die Beschichtung von Metallsubstraten zur Herstellung von kontinuierlich selbstreinigenden Überzügen auf Ofenwandungen von Koch-, Back- und Grillgeräten, wobei die Überzugsmasse eine Emailfritte, 20-80 Gew.-% hitzebeständige Inertstoffe und 3-30 Gew.-% eines Oxidationskatalysators, bezogen auf das Trockengewicht der Masse, enthält, dadurch gekennzeichnet, daß es sich bei dem Oxidationskatalysator um ein mit einem oder mehreren Metalloxiden beschichtetes Glimmerplättchen handelt.

2. Verwendung einer katalytisch aktiven Überzugsmasse nach Anspruch 1, dadurch gekennzeichnet, daß es sich bei dem Oxidationskatalysator um ein mit TiO₂ und/oder Fe₂O₃ beschichtetes Glimmerplättchen handelt.

3. Selbstreinigende beschichtete Metallsubstrate für Ofenwandungen von Koch-, Back- oder Grillgeräten, enthaltend eine katalytisch aktive Überzugsmasse, die eine Emailfritte, 20-80 Gew.-% hitzebeständige Inertstoffe und 3-30 Gew.-% eines Oxidationskatalysators, bezogen auf das Trockengewicht der Masse, enthält, dadurch gekennzeichnet, daß es sich bei dem Oxidationskatalysator um ein mit einem oder mehreren Metalloxiden beschichtetes Glimmerplättchen handelt.

4. Selbstreinigende beschichtete Metallsubstrate nach Anspruch 3, dadurch gekennzeichnet, daß die aufgebrachte Überzugsmasse eine Schichtdicke von 100 bis 500 µm aufweist.

5. Verfahren zur Herstellung eines selbstreinigenden beschichteten Metallsubstrats gemäß Anspruch 3, dadurch gekennzeichnet, daß man die Überzugsmasse in Form einer wäßrigen Suspension im Zweischicht-Zwei-Brand- oder Zweischicht-Ein-Brand-Verfahren auf das Metallsubstrat aufbringt.

## Revendications

1. Utilisation d'une composition de revêtement catalytiquement active pour revêtir des substrats métalliques, pour la formation de revêtements, assurant un auto-nettoyage continu, sur les parois des fours ou les cuisinières, les étuves et les grils, où la composition de revêtement comprend une fritte émaillée, de 20 à 80 % en poids de substances inertes résistant à la chaleur, et de 3 à 30 % en poids d'un catalyseur d'oxydation, par rapport au poids sec de la composition, caractérisée en ce que le catalyseur d'oxydation est constitué d'une plaquette de mica revêtue d'un ou plusieurs oxydes métalliques.

2. Utilisation de la composition de revêtement catalytiquement active selon la revendication 1, caractérisée en ce que le catalyseur d'oxydation est une plaquette de mica revêtue de TiO₂ et/ou de Fe₂O₃.

3. Substrats métalliques à revêtement auto-nettoyant, pour parois de fours ou cuisinières, étuves et grils, comprenant une composition de revêtement catalytiquement active qui comprend une fritte émaillée, de 20 à 80 % en poids de substances inertes résistant à la chaleur, et de 3 à 30 % en poids d'un catalyseur d'oxydation, par rapport au poids sec de la composition, caractérisés en ce que le catalyseur d'oxydation est une plaquette de mica revêtue d'un ou plusieurs oxydes métalliques.

4. Substrats métalliques à revêtement auto-nettoyant selon la revendication 3, caractérisés en ce que la composition de revêtement telle qu'appliquée a une épaisseur de couche de 100 à 500 µm.

5. Procédé pour préparer un substrat métallique à revêtement auto-nettoyant selon la revendication 3, caractérisé en ce que la composition de revêtement est appliquée sur le substrat métallique sous forme d'une suspension aqueuse par un procédé à deux couches/deux cuissons ou deux couches/une cuisson.
